# EUROPEAN PATENT APPLICATION

(11) **EP 2 701 055 A2**
(43) Date of publication of application: **26.02.2014**
(21) Application number: 13181105.1
(22) Date of filing: 20.08.2013
(51) Int. Cl.: G06F 3/0488, G06F 3/0481

(54) **Application execution method and mobile terminal**

(30) Priority: 24.08.2012 KR 20120092919
(71) Applicant: Samsung Electronics Co., Ltd, Gyeonggi-do 443-742 (KR)
(72) Inventor: Kim, Woogeun, Gyeongsangbuk-do (KR)
(74) Representative: Birchenough, Lewis

(57) **Abstract**

The present invention relates to an application execution method and a mobile terminal supporting the same and, more particularly, to an application execution method and mobile terminal supporting the same wherein, when one of icons displayed on a touchscreen is selected, an application associated with the selected icon is executed. The method for application execution in a mobile terminal having a touchscreen includes displaying an icon associated with an application, detecting a touch related to the icon, identifying movement of the touch, and executing a function corresponding to the touch movement among functions of the application.

## Description

### BACKGROUND OF THE INVENTION

### 1. Field of the Invention:

The present invention relates generally to an application execution method and a mobile terminal supporting the same. More particularly, although not exclusively, the present invention relates to an application execution method and a mobile terminal supporting the same wherein, when an icon displayed on a touchscreen is selected, an application associated with the selected icon is executed.

### 2. Description of the Related Art:

A typical mobile terminal displays icons associated with applications. When an icon is selected by the user, an application associated with the icon is executed and an execution screen defined by the application developer is displayed. For example, when the user selects a phonebook icon, a corresponding phonebook application is executed and a screen containing a phone number list is displayed as a base screen of the phonebook application.

However, a typical execution scheme of the related art suffers a disadvantage in that an application always starts with a base screen specified by the developer. For example, to find a specific person in a phonebook, the user must execute multiple stages (e.g. stages of user input) such as selecting an application icon, selecting a search menu to enter a keyword for the person to be found, and entering a keyword for a phone number. A relatively large number of stages results in an inconvenience for the user.

Furthermore, a single application may have a plurality of corresponding functions. However, in reality, a user tends to use only a few of the functions frequently. For example, although a phonebook application and an alarm application are respectively used to search for a phone number and to generate an alarm, when the user selects a phonebook icon or an alarm icon, a base screen for the respective application is displayed. That is, the mobile terminal displays an execution screen that is needed by the user only when the user performs an additional action, such as selection of an alarm button on the base screen. Such an execution scheme requires the user to make an additional selection to reach a frequently used function, causing an inconvenience for the user. Accordingly, there is a need for an application execution method and a mobile terminal supporting the same that enable the user to directly execute a desired function without having to proceed through multiple stages.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide an application execution method and mobile terminal that enable a user to directly execute a desired function without having to proceed through multiple stages.

In accordance with an aspect of the present invention, there is provided a method for application execution in a mobile terminal, the mobile terminal comprising a touchscreen, the method comprising the steps of: displaying an icon associated with an application; detecting a touch related to the icon; identifying a movement of the touch; and executing a function corresponding to the touch movement among functions of the application.

In certain exemplary embodiments, the executing of the function comprises: identifying handwriting created by the touch movement; determining, when the touch is released, whether a new touch is detected within a threshold time after the touch is released; converting, when a new touch is not detected within the threshold time, the identified handwriting into text; and executing a function mapped to the text.

In certain exemplary embodiments, the executing of the function further comprises displaying the handwriting created by the touch movement.

In certain exemplary embodiments, the identifying of the handwriting comprises identifying one of a number and a letter.

In certain exemplary embodiments the identifying of the handwriting further comprises identifying one of a plurality of numbers and a plurality of letters.

In accordance with another aspect of the present invention, there is provided a mobile terminal comprising: a touchscreen configured to display an icon associated with an application; a storage unit configured to store information (e.g. a lookup table) specifying a function corresponding to movement of a touch; and a control unit configured to execute, when a movement of a touch related to the icon is detected on the touchscreen, a function corresponding to the touch movement among functions of the application.

In certain exemplary embodiments, the control unit is configured to determine, when the touch is released, whether a new touch is detected within a threshold time after the touch is released, convert, when a new touch is not detected within the threshold time, handwriting created by the touch movement into text, and execute a function mapped to the text.

In certain exemplary embodiments, the touchscreen is configured to display a function execution screen corresponding to the executed function.

In certain exemplary embodiments, the control unit is configured to identify the handwriting by identifying one of a number and a letter.

In certain exemplary embodiments, the control unit is configured to identify the handwriting further by identifying one of a plurality of numbers and a plurality of letters.

The application execution method and mobile terminal of certain embodiments of the present invention enable the user to directly execute a desired function without having to proceed through multiple stages (e.g. stages of user input).

Another aspect of the present invention provides a computer program comprising instructions arranged, when executed, to implement a method, system and/or apparatus, in accordance with any one of the above-described aspects. A further aspect of the present invention provides a machine-readable storage storing such a program.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, and features and advantages of certain exemplary embodiments and aspects of the present invention will be more apparent from the following description taken in conjunction with the accompanying drawings, in which:

FIG. 1 is a block diagram of a mobile terminal according to an exemplary embodiment of the present invention;

FIG. 2 is a flowchart of an application execution method according to an exemplary embodiment of the present invention;

FIGS. 3A and 3B, 4A and 4B, and 5A and 5B are screen representations illustrating application execution according to exemplary embodiments of the present invention;

FIG. 6 is a flowchart of an application execution method according to an exemplary embodiment of the present invention; and

FIG. 7 is a flowchart of an application execution method according to an exemplary embodiment of the present invention.

Throughout the drawings, it should be noted that the same or similar reference numbers may be used to refer to the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention, as defined by the claims. It includes various specific details to assist in that understanding but these are to be regarded as merely exemplary. Accordingly, those of ordinary skill in the art will recognize that various changes and modifications of the embodiments described herein can be made without departing from the scope of the invention.

In addition, descriptions of well-known functions, processes, features, elements, structures and constructions may be omitted for clarity and conciseness, and to avoid obscuring the subject matter of the present invention.

The terms and words used in the following description and claims are not limited to the bibliographical meanings, but, are merely used to enable a clear and consistent understanding of the invention. Accordingly, it should be apparent to those skilled in the art that the following description of exemplary embodiments of the present invention is provided for illustration purpose only and not for the purpose of limiting the invention, as defined by the appended claims.

It is to be understood that, throughout the description and claims of this specification, the singular forms "a," "an," and "the" include plural referents unless the context clearly dictates otherwise. Thus, for example, reference to "a component surface" includes reference to one or more of such surfaces.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

An icon may refer generally to an entity (e.g. a graphical element) corresponding to a resource or utility (for example a piece of software, an application, a function, a command, an item of data, a file, a folder, a region of memory, a network, a piece of hardware, a device etc.) providing one or more functions and/or services. In certain embodiments of the present invention, an icon may refer more specifically to an entity corresponding to an application. An icon may be displayed on a touchscreen and may take any suitable form, for example a thumbnail, text, an image, and the like. When an icon is selected (e.g. by being tapped by a user), the mobile terminal displays an execution screen of the corresponding application. Here, the execution screen may be a base (e.g. predetermined) screen (showing, for example, a list of phone numbers), for example specified by the application developer, or the last screen (showing, for example, detailed information of a recipient in the phone number list) displayed when execution of the application was last ended.

In exemplary embodiments of the present invention, when movement of a touch related to an icon is detected, the mobile terminal performs a function corresponding to the movement of the touch. Here, movement of a touch may refer to any suitable characteristic of the touch, for example, at least one of handwriting made by the touch, a movement direction of the touch, a movement speed of the touch, and/or the shape of the trace of the touch. The mobile terminal may additionally or alternatively perform a function corresponding to other characteristics of the touch, for example a duration or pressure of the touch. For example, the mobile terminal may perform a function according to handwriting of a touch. The mobile terminal may perform a function according to a movement direction of a touch. Further, the mobile terminal may perform a function according to handwriting and a movement direction of a touch.

In embodiments of the present invention, a mobile terminal refers to a portable electronic device having a touchscreen, for example a mobile phone, a smartphone, a tablet computer, a laptop computer, and the like.

Hereinafter, an exemplary application execution method and a mobile terminal supporting the same are described. The description of the various embodiments is to be construed as exemplary only and does not describe every possible embodiment of the invention. Therefore, it should be understood that various changes may be made and equivalents may be substituted for elements of embodiments of the invention. In the drawings, some elements may be exaggerated or only outlined in brief, and thus may be not drawn to scale.

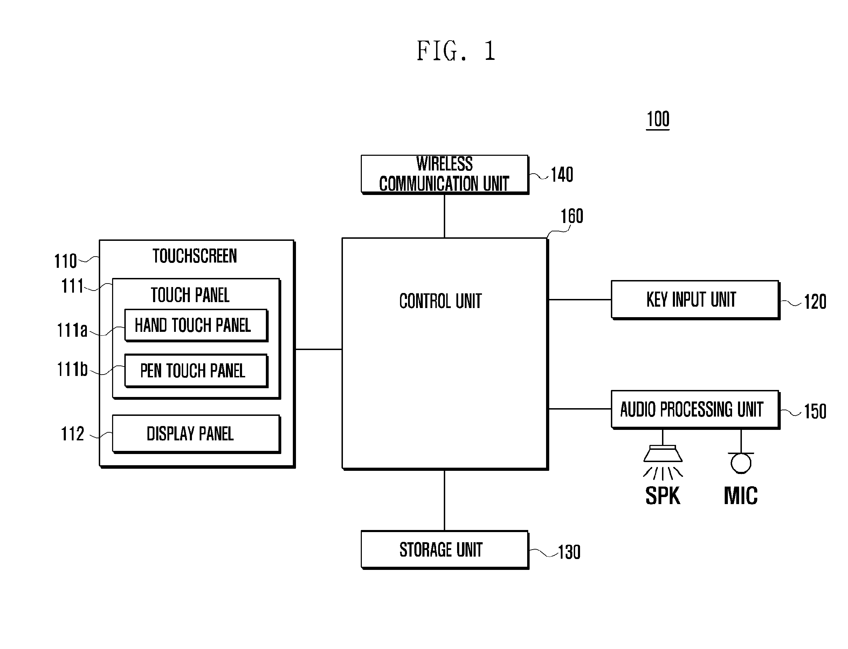

FIG. 1 is a block diagram of a mobile terminal according to an exemplary embodiment of the present invention.

Referring to FIG. 1, the mobile terminal 100 includes a touchscreen 110, a key input unit 120, a storage unit 130, a wireless communication unit 140, an audio processing unit 150 that includes a speaker (SPK) and a microphone (MIC), and a control unit 160.

The touchscreen 110 is composed of a touch panel 111 and a display panel 112. The touch panel 111 may be placed on the display panel 112. More specifically, the touch panel 111 may be of an add-on type (placed on the display panel 112) or an on-cell or in-cell type (inserted in the display panel 112).

The touch panel 111 generates an analog signal (for example, a touch event) corresponding to a user gesture thereon, converts the analog signal into a digital signal (A/D conversion), and sends the digital signal to the control unit 150. The control unit 160 senses a user gesture from the received touch event. The control unit 160 controls other components on the basis of the sensed user gesture. A user gesture may be categorized as a touch or a touch gesture. The touch gesture may include a tap, a drag, a flick, or the like. That is, the touch indicates a contact with the touchscreen and the touch gesture indicates a change of the touch, for example from a touch-on to a touch-off on the touchscreen.

The touch panel 111 may be a composite touch panel, which includes a hand touch panel 111a to sense a hand gesture and a pen touch panel 111b to sense a pen gesture. Here, the hand touch panel 111a may be realized using capacitive type technology. The hand touch panel 111a may also be realized using resistive type, infrared type, or ultrasonic type technology. The hand touch panel 111a may generate a touch event according to not only a hand gesture of the user but also a different object (for example, an object made of a conductive material capable of causing a change in capacitance). The pen touch panel 111b may be realized using electromagnetic induction type technology. Hence, the pen touch panel 111b generates a touch event according to interaction with a stylus touch pen specially designed to form a magnetic field.

The display panel 112 converts video data from the control unit 160 into an analog signal and displays the analog signal under control of the control unit 160. That is, the display panel 112 may display various screens in the course of using the mobile terminal 100, for example a lock screen, a home screen, an environment setting screen, an application (abbreviated to "app") execution screen, and a keypad. When a user gesture for unlocking is sensed, the control unit 160 may change the lock screen into the home screen or the app execution screen. The home screen may contain many icons mapped with various apps related to, for example, environment setting, browsing, call handling, messaging, and the like. When an app icon is selected by the user (for example, the icon is tapped), the control unit 160 may execute an app mapped to the selected app icon and display a base screen of the app on the display panel 112. When a touch movement related to an app icon is detected, the control unit 160 may perform a function of the corresponding app according to the touch movement and display a screen corresponding to the function on the display panel 112.

Under control of the control unit 160, the display panel 112 may display a first screen, for example an app execution screen in the background and display a second screen such as a keypad in the foreground as an overlay on the first screen. The display panel 112 may display multiple screens so that they do not overlap with each other under control of the control unit 160. For example, the display panel 112 may display one screen in a first screen area and display another screen in a second screen area. The display panel 112 may be realized using Liquid Crystal Display (LCD) devices, Organic Light Emitting Diodes (OLEDs), Active Matrix Organic Light Emitting Diodes (AMOLEDs), and the like.

The key input unit 120 may include a plurality of keys (buttons) for entering alphanumeric information and for setting various functions. Such keys may include a menu invoking key, a screen on/off key, a power on/off key, a volume adjustment key, and the like. The key input unit 120 generates key events for user settings and for controlling functions of the mobile terminal 100 and transmits the key events to the control unit 160. Key events may be related to power on/off, volume adjustment, screen on/off and the like. The control unit 160 may control the above components according to key events. Keys (e.g. buttons) on the key input unit 120 may be referred to as hard keys, and keys (e.g. buttons) displayed on the touchscreen 110 may be referred to as soft keys.

The storage unit 130 serves as a secondary memory unit for the control unit 160 and may include one or more of a disk, a Random Access Memory (RAM), a Read Only Memory (ROM), a flash memory, and the like. Under control of the control unit 160, the storage unit 130 may store data generated by the mobile terminal 100 or received from an external device (for example, a server, a desktop computer, a tablet computer, and the like) through the wireless communication unit 140 or an external device interface (not shown). The storage unit 130 stores first information, which in this embodiment is in the form of a first lookup table, specifying functions mapped with text (for example, characters, digits and symbols). An example of the first lookup table is illustrated in Table 1.

**TABLE 1**

| Application | Text | Executed function |
|---|---|---|
| Phonebook | Character | Search for recipient using character (e.g. 'a') as keyword |
| | Number | Search for phone number using number (e.g. 1234) as keyword |
| Camera | V | Video recording mode |
| | C | Photograph shooting mode |
| Clock | A | Alarm |
| | S | Stopwatch |
| | T | Timer |
| Music player | R | Random playback |
| | S | End of playback |

The storage unit 130 stores second information, which in this embodiment is in the form of a second lookup table, specifying functions mapped with touch movement directions. An example of the second lookup table is illustrated in Table 2.

**TABLE 2**

| Application | Movement direction | Executed function |
|---|---|---|
| Music player | Up (↑) | Volume up |
| | Down (↓) | Volume down |
| | Right (→) | Play next song |
| | Left (←) | Play previous song |

The storage unit 130 stores third information, which in this embodiment is in the form of a third lookup table, specifying functions mapped with handwriting and movement direction (or trace shape and direction) of a touch. An example of the third lookup table is illustrated in Table 3.

**TABLE 3**

| Application | Handwriting and movement direction | Executed function |
|---|---|---|
| Music player | Handwriting of a circle in counter clockwise direction ( 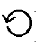 ) | Play previous playlist |
| | Handwriting of a circle in clockwise direction ( 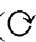 ) | Play next playlist |

The lookup tables described above may be generated by the manufacturer. The lookup tables may also be generated according to a selection or preference of the user. The lookup tables generated by the manufacturer may be changed by the user. That is, the user may specify functions mapped with text and functions mapped with movement directions of touch in a desired manner.

The storage unit 130 stores an Operating System (OS) of the mobile terminal 100, various applications, for example a handwriting recognition program, a trace-shape recognition program, a user interface, and the like. Here, the handwriting recognition program converts handwriting into text. The user interface supports smooth interaction between the user and an application. In particular, the user interface includes a command to execute a function associated with movement of a touch related to an icon. The storage unit 130 may store embedded applications and third party applications. Embedded applications refer to applications installed in the mobile terminal 100 by default. For example, embedded applications may include a browser, an email client, an instant messenger, and the like. As is widely known, third party applications include a wide variety of applications that may be downloaded from online markets and be installed in the mobile terminal 100. Such third party applications may be freely installed in or uninstalled from the mobile terminal 100. When the mobile terminal 100 is turned on, a boot program is loaded into the main memory (e.g. RAM) of the control unit 160 first. The boot program loads the operating system in the main memory, so that the mobile terminal 100 may operate. The operating system loads the user interface and applications in the main memory for execution. Such a boot and loading process is widely known in the computer field and a further description thereof is omitted.

The wireless communication unit 140 performs communication for voice calls, video calls and data calls under control of the control unit 160. To this end, the wireless communication unit 140 may include a radio frequency transmitter for upconverting the frequency of a signal to be transmitted and amplifying the signal, and a radio frequency receiver for low-noise amplifying a received signal and downconverting the frequency of the received signal. The wireless communication unit 140 may include a mobile communication module (based on 3G, 3.5G or 4G mobile communication), a digital broadcast reception module (such as a Digital Multimedia Broadcasting (DMB) module), and a local area communication module (such as a Wi-Fi module or a Bluetooth module).

The audio processing unit 150 inputs and outputs audio signals for speech recognition, voice recording, digital recording and calls in cooperation with the speaker and the microphone. The audio processing unit 150 converts a digital audio signal from the control unit 160 into an analog audio signal through Digital to Analog (D/A) conversion, amplifies the analog audio signal, and outputs the amplified analog audio signal to the speaker. The audio processing unit 150 converts an analog audio signal from the microphone into a digital audio signal through A/D conversion and sends the digital audio signal to the control unit 160. The speaker converts an audio signal from the audio processing unit 150 into a sound wave and outputs the sound wave. The microphone converts a sound wave from a person or other sound source into an audio signal.

The control unit 160 controls the overall operation of the mobile terminal 100, controls signal exchange between internal components thereof, and performs data processing. The control unit 160 may include a main memory to store application programs and the operating system, a cache memory to temporarily store data to be written to the storage unit 130 and data read from the storage unit 130, a Central Processing Unit (CPU), and a Graphics Processing Unit (GPU). The operating system serves as an interface between hardware and programs, and manages computer resources such as the CPU, the GPU, the main memory, and a secondary memory. That is, the operating system operates the mobile terminal 100, determines the order of tasks, and controls CPU operations and GPU operations. The operating system controls execution of application programs and manages storage of data and files. As is widely known, the CPU is a key control component of a computer system that performs computation and comparison on data, and interpretation and execution of instructions. The GPU is a graphics control component that performs computation and comparison on graphics data, and interpretation and execution of instructions in place of the CPU. The CPU and the GPU may be combined into a single integrated circuit package composed of two or more independent cores (for example, quad cores). The CPU and the GPU may be combined into a single chip as a System on Chip (SoC). The CPU and the GPU may be combined into a multi-layer package. A structure including a CPU and the GPU may be referred to as an Application Processor (AP).

Next, exemplary operations of the control unit 160 related to exemplary embodiments of the present invention, namely application execution, are described with reference to the drawings.

The skilled person will appreciate that many variations to the embodiments described herein are possible. For example, the mobile terminal 100 may further include one or more units having comparable or equivalent functions to the above-described units, or one or more units having different functions to the above-described units, for example a Global Positioning System (GPS) module, a Near Field Communication (NFC) module, a vibration motor, a camera, an acceleration sensor, a gyro sensor, and an external device interface. Furthermore, one or more units of the mobile terminal 100 may be removed or replaced with another unit.

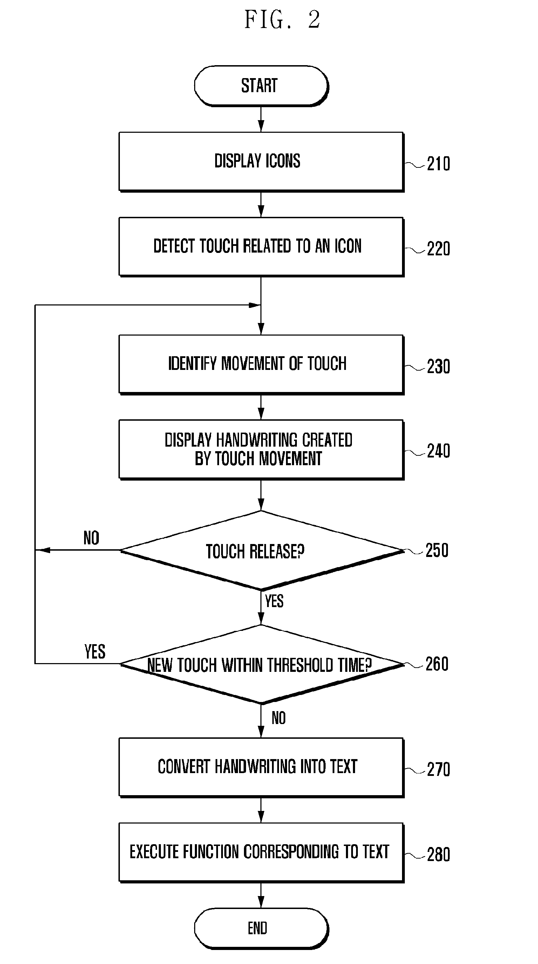

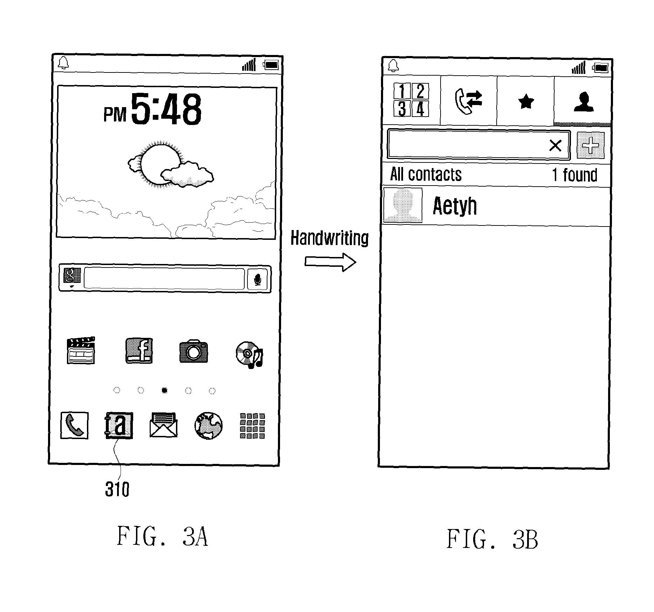

FIG. 2 is a flowchart of an application execution method according to an exemplary embodiment of the present invention. FIGS. 3A and 3B, 4A and 4B, and 5A and 5B are screen representations illustrating application executions according to exemplary embodiments of the present invention.

Referring to FIG. 2, the touchscreen 110 displays icons under control of the control unit 160 in step 210. Here, the displayed icons may be included in a lock screen, a home screen, a menu screen, an application execution screen, and the like.

The control unit 160 detects a touch related to an icon in step 220. A touch related to an icon may be a touch which the control unit recognizes or regards as being for selecting or designating the icon (e.g. according to the intention or desire of a user). For example, the touch may be a touch at the position of the icon, a touch at least partially overlapping the icon, a touch close to the icon (e.g. a touch within a predetermined distance from the icon), or a touch closer to the icon than any other icon. The touch panel 111 detects a user touch, generates a touch event corresponding to the touch, and sends the touch event to the control unit 160. Here, a touch event may be a first touch event generated by the hand touch panel 111a or a second touch event generated by the pen touch panel 111b. The user may touch the touchscreen 110 by hand or using a pen. The user may hold a pen with two fingers and touch the touchscreen 110 with the pen and hand. The control unit 160 recognizes a user touch through a touch event. When a hand touch or a pen touch is detected on an icon, the control unit 160 regards the detected touch as being related to the icon.

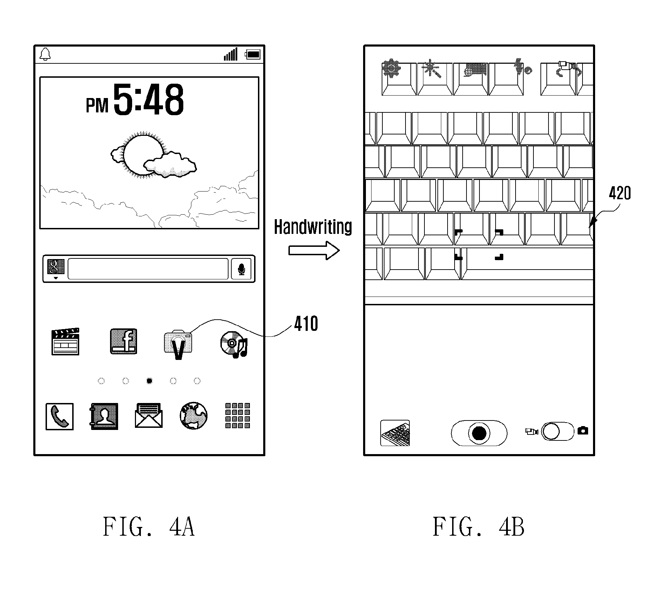

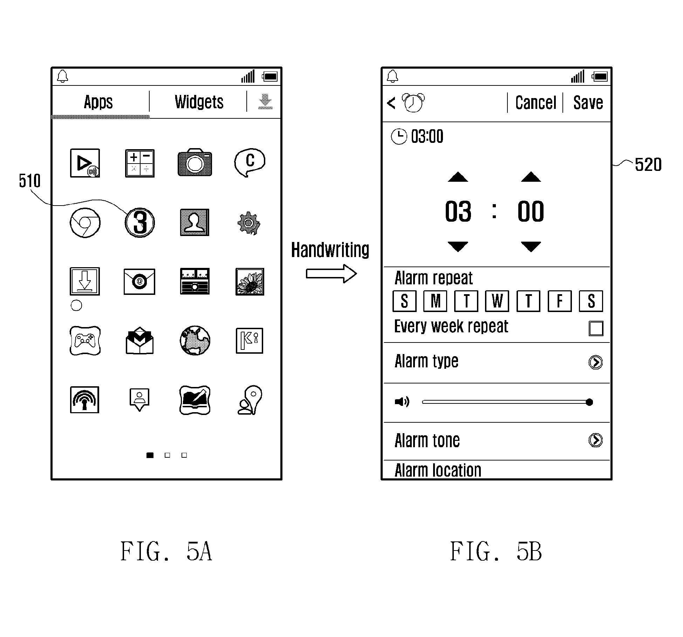

The control unit 160 identifies movement of the touch in step 230. The control unit 160 identifies handwriting created by the touch movement and controls the touchscreen 110 to display the handwriting in step 240. The control unit 160 determines whether the touch is released in step 250. When the touch is not released, the process returns to step 230. When the touch is released, the control unit 160 determines whether a new touch is detected within a threshold time after the touch is released in step 260. When a new touch is detected within the threshold time (e.g. 2 seconds) after the touch is released, the process returns to step 230. When a new touch is not detected within the threshold time (e.g. 2 seconds) after the touch is released, the control unit 160 executes a function corresponding to the identified handwriting. More specifically, the control unit 160 converts the identified handwriting into text in step 270. The control unit 160 executes a function mapped with the text with reference to the first lookup table previously described in step 280. For example, referring to FIGS. 3A and 3B, when the user writes 'a' on a phonebook icon 310 with the user's hand or a pen, the control unit 160 converts the handwriting of the user into a character, searches a phonebook DataBase (DB) stored in the storage unit 130 for names containing the character ('a'), and controls the touchscreen 110 to display the found names. Referring to FIGS. 4A and 4B, when the user writes 'V' on a camera icon 410 with the user's hand or a pen, the control unit 160 executes a camera application in a video recording mode and controls the touchscreen 110 to display a preview screen 420. Referring to FIGS. 5A and 5B, when the user writes '3' on a clock icon 510 with the user's hand or a pen, the control unit 160 sets the alarm for 3 A.M. and controls the touchscreen 110 to display an alarm setting screen 520. As described above, when the user handwrites on a specific icon, the control unit 160 directly executes a function corresponding to the handwriting and presents a screen associated with the function in a manner that is more convenient for the user. Notably, although the illustrated examples show receipt of a single character such as the letter 'a', the letter 'V' or the number '3', the process of FIG. 2 is not so limited. For example, the user may input the letter 'a' followed by the letter 'e', such that, as illustrated in FIG. 3B, the control unit 160 converts the handwriting into two characters, searches the phonebook DB for names containing the letter 'a' followed by the letter 'e', and controls the touchscreen 110 to display the found names. Similarly, the user may write '3' followed by writing '1' and writing '5' on the clock icon 510 such that the control unit 160 sets the alarm for 3:15 A.M. and controls the touchscreen 110 to display a corresponding alarm setting screen.

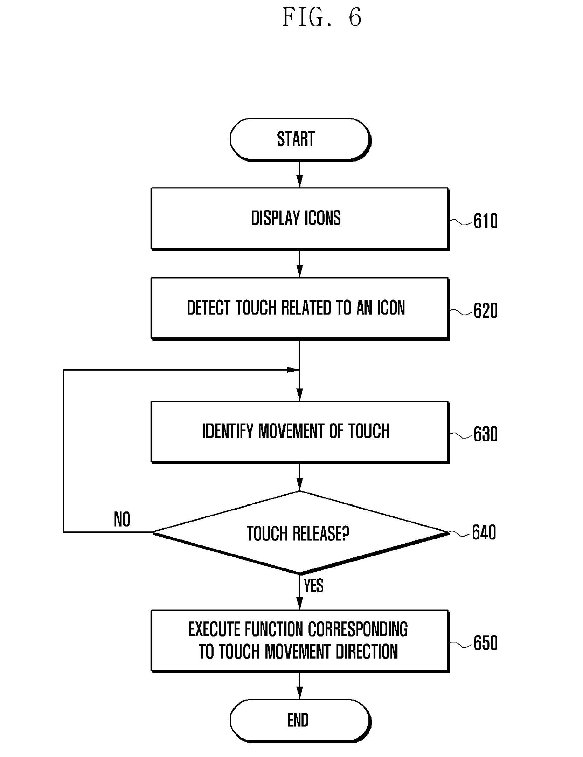

FIG. 6 is a flowchart of an application execution method according to an exemplary embodiment of the present invention.

Referring to FIG. 6, the touchscreen 110 displays icons under control of the control unit 160 in step 610. The control unit 160 detects a touch related to an icon in step 620. The control unit 160 identifies movement of the touch in step 630. The control unit 160 determines whether the touch is released in step 640. When the touch is released, the control unit 160 executes a function mapped to the movement direction with reference to the second lookup table previously described in step 650. For example, the control unit 160 may play back a music file. That is, the control unit 160 reads a music file from the storage unit 130, decodes the music file into an audio signal, and outputs the audio signal to the audio processing unit 150. The audio processing unit 150 converts the audio signal into an analog signal and outputs the analog signal to the speaker. The touchscreen 110 displays an icon associated with a music player. The music player icon may be included in a lock screen or a home screen. In an exemplary implementation, when the movement direction of a touch on the music player icon is up (↑), the control unit 160 controls the audio processing unit 150 to amplify the audio signal (i.e. volume up). Similarly, when the movement direction of a touch on the music player icon is right (→), the control unit 160 plays back the next music file. Of course, these actions and directions are merely examples and may be changed by a manufacturer or the user.

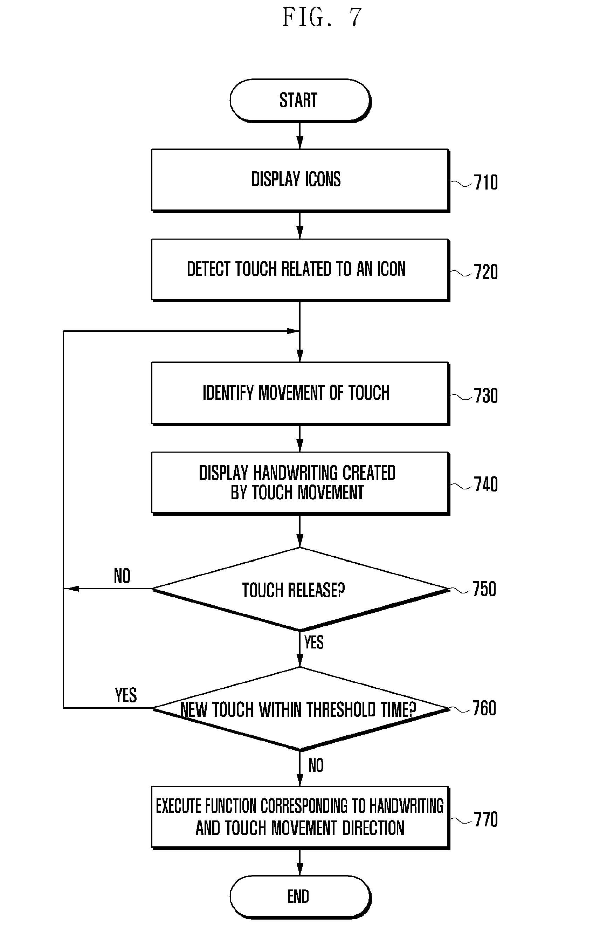

FIG. 7 is a flowchart of an application execution method according to an exemplary embodiment of the present invention.

Referring to FIG. 7, the touchscreen 110 displays icons under control of the control unit 160 in step 710. The control unit 160 detects a touch related to an icon in step 720. The control unit 160 identifies movement of the touch in step 730. The control unit 160 identifies handwriting created by a touch movement and controls the touchscreen 110 to display the handwriting in step 740. The control unit 160 determines whether the touch is released in step 750. When the touch is not released, the process returns to step 730. When the touch is released, the control unit 160 determines whether a new touch is detected within a threshold time after the touch is released in step 760. When a new touch is detected within the threshold time (e.g. 2 seconds) after the touch is released, the process returns to step 730. When a new touch is not detected within the threshold time (e.g. 2 seconds) after the touch is released, the control unit 160 executes a function mapped to the handwriting and touch movement direction with reference to the third lookup table previously described in step 770. For example, the control unit 160 plays back a music file on a second playlist among first to third playlists. The touchscreen 110 displays an icon associated with a music player. For example, when the handwriting of a touch on the music player icon is a circle and the movement direction of the touch is counterclockwise ( 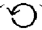 ), the control unit 160 plays a music file in the first playlist (previous playlist).

Although certain embodiments have been described in which a function of an application is executed, the skilled person will appreciate that the present invention is applicable to executing functions or services provided by resources or utilities other than applications. For example, in certain embodiments, a specific function or service from among a set of functions or services provided by a resource or utility may be executed according to a characteristic (e.g. direction, speed, duration, trace shape) of a touch input (e.g. touch or touch gesture) made in relation to an icon corresponding to the resource or utility.

It will be appreciated that embodiments of the present invention may be realized in the form of hardware, software or a combination of hardware and software. Any such software may be stored in the form of volatile or non-volatile storage, for example a storage device (e.g. ROM), whether erasable or rewritable or not, or in the form of memory (e.g. RAM, memory chips, device or integrated circuits), or on an optically or magnetically readable medium (e.g. a CD, DVD, magnetic disk or magnetic tape or the like).

For example, the application execution method of certain embodiments of the present invention may be implemented as a computer program and may be stored in various computer readable storage media. The computer readable storage media may store program instructions, data files, data structures and combinations thereof. The program instructions may include instructions developed specifically for embodiments of the present invention and existing general-purpose instructions. The computer readable storage media may include magnetic media, for example a hard disk and floppy disk, optical media, for example a CD-ROM and DVD, magnetooptical media, for example a floptical disk, and memory devices for example a ROM, RAM and flash memory. The program instructions may include machine codes produced by compilers and high-level language codes executable through interpreters. Each hardware device may be replaced with one or more software modules to perform operations according to embodiments of the present invention.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the invention has been shown and described with reference to certain exemplary embodiments thereof, it will be understood by those skilled in the art that various changes in form and details may be made therein without departing from the scope of the invention, as defined by the appended claims.

## Claims

1. A method for application execution in a mobile terminal having a touchscreen, the method comprising:
displaying an icon associated with an application;
detecting a touch related to the icon;
identifying a movement of the touch; and
executing a function corresponding to the touch movement among functions of the application.

2. The method of claim 1, wherein the executing of the function comprises:
identifying handwriting created by the touch movement;
determining, when the touch is released, whether a new touch is detected within a threshold time after the touch is released;
converting, when a new touch is not detected within the threshold time, the identified handwriting into text; and
executing a function mapped to the text.

3. The method of claim 2, wherein the executing of the function further comprises displaying the handwriting created by the touch movement.

4. The method of any preceding claim, wherein the detecting of the touch related to the icon comprises detecting a pen touch on the icon.

5. The method of any preceding claim, wherein the executing of the function comprises:
identifying handwriting created by the touch movement;
determining, when the touch is released, whether a new touch is detected within a threshold time after the touch is released; and
executing, when a new touch is not detected within the threshold time, a function according to the handwriting and the movement direction of the touch.

6. The method of any preceding claim, wherein the executing of the function comprises executing a function corresponding to the movement direction of the touch.

7. A mobile terminal comprising:
a touchscreen configured to display an icon associated with an application;
a storage unit configured to store a lookup table specifying a function corresponding to movement of a touch; and
a control unit configured to execute, when movement of a touch related to the icon is detected on the touchscreen, a function corresponding to the touch movement among functions of the application.

8. The mobile terminal of claim 7, wherein the control unit is configured to determine, when the touch is released, whether a new touch is detected within a threshold time after the touch is released, convert, when a new touch is not detected within the threshold time, handwriting created by the touch movement into text, and execute a function mapped to the text.

9. The mobile terminal of claim 8, wherein the touchscreen is configured to display a function execution screen corresponding to the executed function.

10. The mobile terminal of claim 8 or 9, wherein the touchscreen is configured to display the handwriting.

11. The mobile terminal of any of claims 7 to 10, wherein the control unit is configured to detect a pen touch on the icon.

12. The mobile terminal of any of claims 7 to 11, wherein the control unit is configured to determine, when the touch is released, whether a new touch is detected within a threshold time after the touch is released, and execute, when a new touch is not detected within the threshold time, a function corresponding to handwriting created by the touch movement and the movement direction of the touch.

13. The mobile terminal of any of claims 7 to 12, wherein the control unit is configured to execute a function corresponding to the movement direction of the touch.

14. The mobile terminal of any of claims 7 to 13, wherein the storage unit is configured to store at least one of a first lookup table specifying a function mapped to text, a second lookup table specifying a function mapped to a movement direction of a touch, and a third lookup table specifying a function mapped to both handwriting created by movement of a touch and a movement direction of the touch.

15. A non-transitory computer-readable storage medium storing instructions that, when executed, cause at least one processor to perform the method of any of claims 1 to 6.
